# EUROPEAN PATENT SPECIFICATION

(11) **EP 3 135 568 B1**
(45) Date of publication and mention of the grant of the patent: **15.08.2018**
(21) Application number: 16179143.9
(22) Date of filing: 13.07.2016
(51) Int. Cl.: B62D 55/135, F16H 55/12

(54) **SPROCKET WHEEL**
KETTENRAD
ROUE DENTÉE

(30) Priority: 25.08.2015 SE 1551096
(43) Date of publication of application: 01.03.2017
(73) Proprietor: Nordic Wear Part AB, 941 50 Pitea (SE)
(72) Inventor: Jadinge, Nicklas, 941 48 Piteå (SE)
(74) Representative: AWA Sweden AB

(56) References cited:
- JP-A- H0 389 060
- TW-A- 201 315 916
- US-A- 2 038 695

## Description

### Field of the invention

The present invention relates to a sprocket wheel for driving a mating transmission mechanism such as a conveyor, chain or a crawler track. The invention also relates to a sprocket rim element, and to a sprocket wheel kit comprising a sprocket wheel body and a plurality of sprocket rim elements.

### Background of the invention

A sprocket wheel is a profiled wheel provided with regularly spaced, radially projecting teeth along its rim. The teeth are typically configured for meshing with a chain, track or any other suitable perforated or indented belt, or with e.g. lugs projecting from a belt. The chain or belt is often configured in an endless loop. Sprocket wheels differ from gears in that sprocket wheels are not shaped to mesh together with each other directly but via an intermediate transmission linkage, and from pulleys in that sprocket wheels have teeth and pulleys are smooth. Sprocket wheels are commonly used in bicycles, motorcycles, cars, tracked vehicles, and other machinery to transmit rotary motion between two shafts which are located too far from each other for a direct gear engagement, or where gears for any other reason may be unsuitable. A sprocket wheel may also impart linear motion to e.g. a track, conveyor belt or similar. The fact that a sprocket wheel, unlike a conventional gear, typically engages with a flexible, segmented or otherwise deformable mating transmission component such as a chain makes the sprocket wheel particularly exposed to wear.

US patent 5,456,527 discloses a rotatable tumbler drive for driving the crawler tracks of e.g. a bulldozer. According to US 5,456,527, the excessive wear rate on the tumblers, compared to the crawler tracks, poses a problem, as does the difficulties associated with replacing a heavy tumbler on an even heavier shaft within a complex construction. US 5,456,527 addresses those problems by suggesting a modular tumbler comprising a tumbler body and a plurality of tumbler lugs removably mounted on the tumbler body.

CN204253788U discloses one example of a sprocket having a radially removable tooth. However, the disclosed solution requires the sprocket wheel to be removed from the shaft to get access to the nut engaging the attachment screw.

US3069922A1 discloses another example of a sprocket with removable teeth. The teeth are mounted to the wheel body in the axial direction and are locked thereto by a wedging engagement.

US 2 038 695, which shows the preamble of claim 1, discloses a sprocket wheel with removable teeth. Each tooth comprises a base portion, each end thereof being provided with a semi-circular notch which cooperates with a similar notch in the adjoining end of the base portion of an adjacent tooth for the reception of a bolt.

Although removable segments are known in the art, the segments of this prior art document may be experienced as rather bulky and heavy. Accordingly, there is a need for a more handy design allowing an improved access and ergonomy but with maintained or even improved wear-resistance and durability.

### Summary of the invention

It is an object of the present invention to solve, or at least mitigate, parts or all of the above mentioned problems.

To this end, there is provided a sprocket wheel for rotation about a central axis to drive a mating transmission mechanism such as a conveyor, chain or a crawler track, the sprocket wheel comprising a plurality of teeth distributed tangentially about the sprocket wheel and projecting radially from the central axis, the plurality of teeth defining a corresponding plurality of slots between them and being configured to mesh with a mating transmission mechanism, the sprocket wheel comprising a sprocket wheel body and a plurality of separate sprocket rim elements, wherein each of said sprocket rim elements is detachably attached to the sprocket wheel body by means of a respective attachment screw penetrating into the sprocket wheel body in a substantially radial direction, and wherein each of said sprocket rim elements comprises at least one respective slot of said plurality of slots, and wherein each of said attachment screws holds its respective sprocket rim element to the sprocket wheel body at said respective slot. The sprocket wheel is characterized in that a radially inner surface portion of each of said sprocket rim elements, together with a respective radially outer surface portion of said sprocket wheel body, defines a projection-and-recess arrangement providing tangential support to the engagement between sprocket wheel body and the respective sprocket rim element, and further allowing an individual sprocket rim element to be displaced by a linear radial movement away from the sprocket wheel body, and in that said sprocket rim elements are shaped to allow, after removal, re-attachment in a reverse direction with respect to a radial plane.

Such a design increases the durability and wear resistance of the sprocket wheel. The driving force to/from a mating transmission mechanism such as a conveyor or chain is generally applied at the slot, and the higher the tension of the conveyor chain, the deeper into the slot the engagement force will be applied. In other words, by providing the attachment screws at the slots, the screw engagement between the rim elements and the body will be located close to where the load is the highest. Further, the design allows an easy replacement of individual sprocket rim elements by removing the attachment screw and displacing the sprocket rim element by a linear radial movement away from the sprocket wheel body. This may be made without detaching the mating transmission mechanism.

Each of said attachment screws penetrates into the sprocket wheel body in a substantially radial direction. This results in each of said attachment screws being loaded mainly in the screw's axial direction, which adds strength and wear resistance to the screwed engagement.

A radially inner surface portion of each of said sprocket rim elements defines, together with a respective radially outer surface portion of said sprocket wheel body, a projection-and-recess arrangement providing tangential support to the engagement between sprocket wheel body and the respective sprocket rim element. Such an arrangement prevents any slipping between the sprocket rim elements and the sprocket wheel body when the sprocket wheel is exposed to high torques about the central axis, as well as minimizes tangential shear loads on the attachment screws. Further it facilitates the fitting of the sprocket rim element during mounting since the holes adapted to receive the attachment screw may be automatically aligned.

Said sprocket rim elements are shaped to allow, after removal, re-attachment in a reverse direction with respect to a radial plane. Thereby, the wear life of the sprocket rim elements may be extended by a factor 2 by turning them 180°, such that the previous tangentially leading edge becomes the tangentially trailing edge and vice versa.

Each of said sprocket rim elements is delimited by a tangentially leading edge and a tangentially trailing edge, wherein each of said edges is located at the top of a respective tooth. Thereby tangential support to each rim element is provided as radially far from the central axis as possible. Thereby, the torque load on the attachment screws, about an axis parallel to the central axis, will be reduced. Throughout this disclosure, the terms "axial", "tangential", and "radial" are used for denoting directions within a cylindrical coordinate system, the cylindrical coordinate system having its longitudinal axis concentric with the central axis of the sprocket wheel. By way of example, a tangentially leading edge of a rim element is an edge leading the rim element's trajectory along the azimuth axis of the cylindrical coordinate system as the sprocket wheel is rotated about the central axis. Similarly, the direction of a surface is to be construed as the direction in which the surface faces, i.e. the direction of a surface normal (vector).

According to an embodiment, the tangentially leading edge of each sprocket rim element abuts the tangentially trailing edge of an adjacent sprocket rim element. As there is no gap between consecutive rim elements, the entire radial face of the sprocket wheel body, i.e. the face of the sprocket wheel body facing in the radial direction, may be protected against wear from the mating transmission mechanism.

According to an embodiment, each of said attachment screws is completely countersunk into the bottom of the respective slot. Thereby, said attachment screws will be protected against wear from the mating transmission mechanism.

According to an embodiment, said at least one slot is exactly one slot, and each sprocket rim element comprises one leading edge tooth portion and one trailing edge tooth portion, said tooth portions defining said slot between them. Providing only one slot per rim element facilitates replacing the rim elements without disconnecting the mating transmission mechanism.

According to an embodiment, said sprocket rim elements are point symmetric about a plane defined by the said central axis and an axis radial to said central axis. Thereby, the behaviour, function and durability of the sprocket wheel will be independent of in which orientation the rim elements are attached.

According to an embodiment, at engagement interfaces between said sprocket rim elements and the sprocket wheel body, an axial width of the sprocket rim elements exceeds an axial width of the sprocket wheel body. Thereby, the sprocket wheel body's sprocket rim engagement faces will be entirely protected from wear.

According to another aspect of the invention, parts or all of the above mentioned problems are solved, or at least mitigated, by a sprocket wheel kit comprising a sprocket wheel body and a plurality of sprocket rim elements, the sprocket wheel body and sprocket rim elements being shaped to form, together with a plurality of attachment screws, a sprocket wheel according to any of the embodiments described above.

According to still another aspect of the invention, parts or all of the above mentioned problems are solved, or at least mitigated, by a replacement sprocket rim element for a sprocket wheel or a sprocket wheel kit as described above. The rim element may be used as a spare part for replacing a worn sprocket rim element of a sprocket wheel.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a diagrammatic side view of a modular sprocket wheel according to a first embodiment;
Fig. 2a is an exploded view of the sprocket wheel body and a sprocket rim element of the sprocket wheel of Fig. 1, as seen along an axis A;
Fig. 2b is an exploded view of the sprocket wheel body and a sprocket rim element of the sprocket wheel of Fig. 1, as seen along a direction perpendicular to the axis A;
Fig. 3a is a diagrammatic side view of a modular sprocket wheel according to a second embodiment, as seen along its rotation axis;
Fig. 3b is a diagrammatic view of the sprocket wheel of Fig. 3a, as seen along a direction perpendicular to its rotation axis;
Fig. 4 is an exploded view of the sprocket wheel body and a sprocket rim element of the sprocket wheel of Figs 3a-b, as seen along its rotation axis;
Fig. 5 is a diagrammatic side view of a modular sprocket wheel according to a fourth embodiment; and
Fig. 6 is a diagrammatic side view of a modular sprocket wheel according to a fifth embodiment.

### Detailed description of the exemplary embodiments

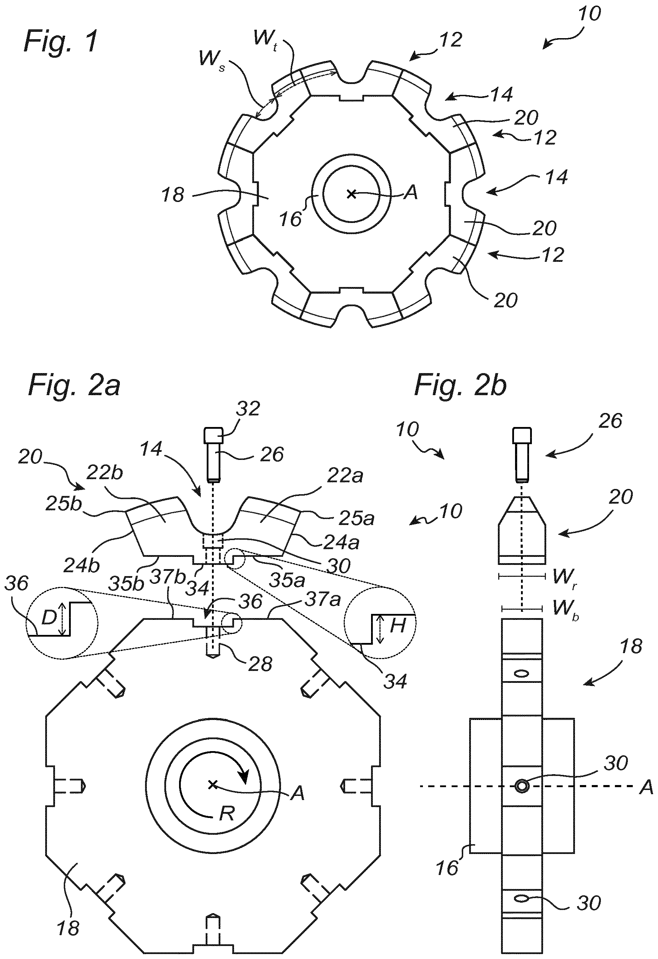

Figures 1, 2a, and 2b illustrate a modular sprocket wheel 10 which, in the illustrated example, is a sprocket wheel to be used together with a conveyor or roller chain. The same principle may also be equally applicable for conveyor chain assemblies for tracked vehicles or crawler tracks.

The sprocket wheel 10 is configured for rotation about a central axis A, illustrated by a cross, and is adapted for driving a mating transmission mechanism, which in the illustrated example would be a conveyor or roller chain. Starting with Fig. 1, the sprocket wheel 10 comprises a plurality of teeth 12 distributed tangentially, with respect to the axis A, about the sprocket wheel 10, and projecting radially away from the central axis A. The teeth 12 are configured to mesh with the conveyor or roller chain in a manner well known to those skilled in the art, and define between them a corresponding plurality of slots 14. The sprocket wheel 10 is a modular sprocket wheel composed of several different parts, and may be assembled using a parts kit comprising some or all of those parts. In the illustrated example, the sprocket wheel 10 comprises a sprocket wheel hub 16, which is concentric with the central axis A. A sprocket wheel body 18 is attached to the hub 16, and a plurality of separate sprocket rim elements 20 are attached to the body 18 and together define the wheel's 10 entire rim for engagement with the conveyor or roller chain. The sprocket rim elements 20 are detachably attached to the sprocket wheel body, such that the rim elements 20 may easily be replaced without replacing the entire sprocket wheel 10. In fact, replacement may be made even without removing the mating conveyor or roller chain.

Fig. 2a illustrates, for clarity of illustration, the sprocket wheel body 18 together with only one of the sprocket rim elements 20. The rim element 20 is formed as a slot element, comprising exactly one slot 14 flanked by a pair of tooth halves 22a, 22b. Assuming that the sprocket wheel 10 will rotate clockwise, indicated by an arrow R, a first tooth half 22a will be the rim element's, with respect to the direction of rotation, tangentially leading tooth half, and the other tooth half 22b will be the tangentially trailing tooth half. The leading tooth half 22a will, together with the trailing tooth half 22b of an adjacent rim element (not shown in Fig. 2a), form a complete tooth 12 (Fig. 1) in such a manner that the leading tooth half 22a of the rim element 20 will be the trailing tooth half of the tooth 12 that is formed together with the trailing tooth half 22b of the adjacent rim element.

The sprocket rim element 20 also has a tangentially leading face 24a and a tangentially trailing face 24b. When attached to the sprocket wheel body 18, the leading face 24a abuts the trailing face of an adjacent sprocket rim element (not shown in Fig. 2a), and the trailing face 24b abuts the leading face of another adjacent sprocket rim element (not shown in Fig. 2a) in the manner apparent from the view of the entire, assembled sprocket wheel 10 of Fig. 1. Referring again to Fig. 2a, a radially outermost edge 25a of the tangentially leading face 24a forms a tangentially leading edge, and a radially outermost edge of the tangentially trailing face 24b forms a tangentially trailing edge. When attached to the sprocket wheel body 18, the rim element's 20 leading edge 25a meets the trailing edge of an adjacent rim element (see Fig. 1) at the top of a tooth 12, and the trailing edge 25b meets the leading edge of another adjacent rim element (see Fig. 1) at the top of another tooth 12. Thereby, the respective tooth halves defining each tooth support each other as radially far from the central axis A as possible. Moreover, as each sprocket rim element 20 abuts an adjacent rim element on each tangential side, the chain of consecutive rim elements 20 will enclose the entire rim of the sprocket wheel body 18 and protect it from wear. The faces 24a-b where the rim elements 20 are divided from each other are not located to the slots 14, where the wear is the highest, but to the teeth 12. Moreover, in the illustrated example, each rim element 20 comprises only one slot. Thereby, the tangential distance spanned by each rim element 20 is minimized, such that only a small portion of the sprocket wheel's 10 radially outer surface need be accessed for replacing a rim element. Thanks to each rim element 20 comprising only one slot 14, replacing the rim elements 20 of a sprocket wheel 10 can be made without first disconnecting the mating conveyor or roller chain. The sprocket wheel 10 may be rotated step-wise, and the rim elements 20 may be consecutively replaced as they pass a position/azimuth in which they do not engage the conveyor or roller chain.

The sprocket rim element 20 is attached to the sprocket wheel body 18 by means of a respective threaded attachment screw 26, which is to be screwed into a threaded hole 28 penetrating radially into the sprocket wheel body 18. A recess 30 in the sprocket rim element 20 allows completely countersinking the head 32 of the screw into the bottom of the rim element's 20 slot 14. For clarity of illustration, the recesses 30 and threaded holes 28 are illustrated with dashed lines in Fig. 2a. Preferably, the screw is of socket type, i. e. has a socket of e.g. hex or torx type, in order to allow minimizing the radius of the recess 30.

Thanks to the screw being located at the bottom of the slot 14, the torque on the attachment screw 26 about an axis parallel to the sprocket wheel's 10 central axis A will be reduced compared to having long screws penetrating all the way through the entire length of the teeth 12. This allows for a more stable engagement between the rim elements 20 and the body 18, resulting in an improved durability of the sprocket wheel 10. Moreover, the driving force applied by the sprocket wheel 10 on the crawler track is typically applied at the inner surface of the slot 14, and the point of application moves deeper into the slot 14 the higher the force of the driving engagement between the sprocket wheel 10 and the conveyor or roller chain..

Referring back to Fig. 1, it will be appreciated that each rim element 20 is attached to the body 18 in the same manner as that illustrated with reference to Fig. 2a.

Turning again to Fig. 2a, a radially inner surface portion of the sprocket rim element 20 is provided with a projection 34, which is shaped to fit in a form-fitting manner into a recess 36 provided in a radially outer surface portion of the sprocket wheel body 18. The projection 34 and the recess 36 should each have a geometry allowing the sprocket rim element 20 to be displaced by a linear radial movement away from the sprocket wheel body 18. By way of example the side walls extending in the radial and tangential directions delimiting the projection 34 and the recess 36 respectively may be perpendicular although it is to be understood that other extensions are possible. The side walls may be flat or profiled while still allowing a linear radial displacement.

It is preferred that the depth D of the recess 36 slightly exceeds the height H of the projection 34. The difference could be in the range of a few tenths of a millimetre to thereby adapt to any dimensional tolerances and hence ensure that the sprocket rim element 20 firmly engages the sprocket wheel body 18 along contact surfaces 37a, 37b and 35a, 35b adjacent the projection 34 and recess 36. The projection 34 and recess 36 thereby define a projection-and-recess arrangement providing tangential, but also radial support to the engagement between sprocket wheel body 18 and the respective sprocket rim element 20. As is illustrated in Fig. 1, similar respective projection-and-recess arrangements are provided at the interfaces between all rim elements 20 and the sprocket wheel body 28.

Again with reference to Fig. 2a, assuming that the sprocket wheel 10 is in driving engagement with the conveyor or roller chain in the rotation direction R, the left inner face of the slot 14 will be the portion of the rim element 20 which is the most exposed to wear. As is apparent from the figure, the sprocket rim element 20 is point symmetric about a plane defined by the axis of the attachment screw 26 and the rotation axis A. Thereby, once the wear on the left inner face of the slot 14 has reached a certain limit level, the rim element 20 may be detached from the sprocket wheel body 18; turned 180° about the axis of the screw 26; and re-attached to the sprocket wheel body 18. Such an operation may extend the wear life of the sprocket rim element 20 by a factor of up to 2.

Fig. 2b illustrates the sprocket wheel of Fig. 2a as seen in a direction perpendicular to the axis A. At the engagement interface between the sprocket rim element 20 and the sprocket wheel body 18, the axial width Wᵣ of the sprocket rim element 20 exceeds the axial width W_{b} of the sprocket wheel body 18. Such an arrangement protects the entire axial width of the radially outer face of the sprocket wheel body 18, and provides some tolerance for axial misalignment of the rim elements 20 on the sprocket wheel body 18 without exposing the radially outer face of the sprocket wheel body 18 to wear.

For the exemplary crawler track sprocket illustrated in Figs 1 and 2a-b, the tangential width Wt of the teeth 12 as measured in the tangential direction in respect to the axis A, substantially exceed the tangential width Wₛ of the slots 14. Depending on application, the two measures may be more or less the same.

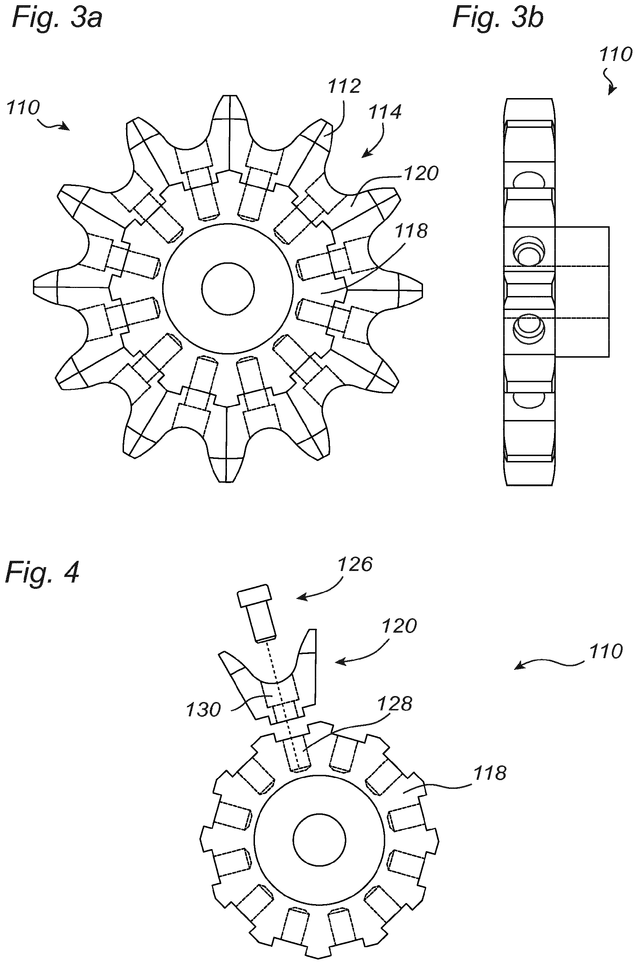

Figs. 3a-b and 4 illustrate a second embodiment of a modular sprocket wheel 110 which, in the illustrated example, is a roller chain sprocket wheel for imparting motion to, e.g., an endless chain in a paper machine or any other industrial machinery. Again, the sprocket wheel 110 comprises a sprocket wheel body 118 enclosed by a plurality of sprocket rim elements 120. Figs 3a-b illustrate the entire sprocket wheel 110 in an assembled state, whereas Fig. 4 for clarity illustrates the sprocket wheel body 118 together with only one single sprocket rim element 120. Similar to the sprocket rim element 20 of Figs 1, 2a and 2b, the sprocket rim element 120 is attached to the sprocket wheel body 118 by means of a screw 126 to be screwed into a threaded screw hole 128 in the sprocket wheel body 118. Again, screw holes 128 and recesses 130 for countersinking the screws 126 are internal to the sprocket wheel 110 and illustrated with dashed lines.

The sprocket wheel 110 differs from the sprocket wheel 10 described with reference to Figs 1 and 2a-b in that the sprocket wheel 110 is provided with a larger number of teeth 112 and slots 114. Moreover, the tangential width of the slots 114 substantially exceeds the tangential width of the teeth 112, which is rather typical for a chain sprocket.

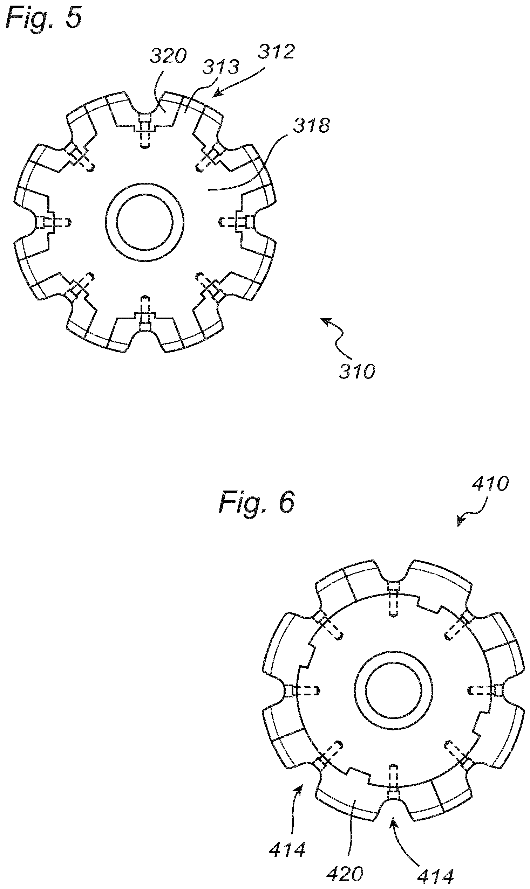

A third embodiment of a modular sprocket wheel 310 is illustrated in Fig. 5. The sprocket wheel 310 is similar to the sprocket wheel 10 described with reference to Figs 1 and 2a-b, but differs in that the sprocket rim elements 320 of the sprocket wheel 310 do not abut each other, and do not cover the entire radially outer surface of the sprocket wheel body 318. Instead, the sprocket wheel body 318 defines a tooth centre portion 313 of each tooth 312, which tooth centre portion 313 extends radially all the way to the outer rim of the sprocket wheel 310. The tooth centre portion 313 is integrally formed with the sprocket wheel body 318, and thereby provides a very solid tangential support to the rim elements 320. As is apparent from the illustration, each sprocket rim element 320 comprises one slot only, and is mounted in a socket formed in the sprocket wheel body 318. With such an arrangement, the same rim element design may be used for a large span of sprocket wheel radii and/or number of teeth, since the compatibility between sprocket wheel body 318 and sprocket rim elements 320 is determined only by the shape of the sockets, which may be the same for different types of sprocket wheels. It goes without saying that this embodiment may be provided with a projection-and-recess arrangement in line with that previously described in view of the embodiment of Fig. 1.

A fourth embodiment of a modular sprocket wheel 410 is illustrated in Fig. 6. The sprocket wheel 410 is similar to the sprocket wheel 10 described with reference to Figs 1 and 2a-b, but differs in that there is no one-to-one relation between slots 414 and rim elements 420. Instead, each rim element 420 is provided with two slots 414. It goes without saying that this embodiment may be provided with a projection-and-recess arrangement in line with that previously described in view of the embodiment of Fig. 1.

The invention has mainly been described above with reference to a few embodiments. However, as is readily appreciated by a person skilled in the art, other embodiments than the ones disclosed above are equally possible within the scope of the invention, as defined by the appended patent claims. By way of example, the modular sprocket wheel of Fig. 6 does not present a one-to-one relation between slots 414 and rim elements 420. Similarly, there does not need to be a one-to-one relation between rim elements 420 and screws, or between slots 414 and screws.

All illustrated embodiments are point symmetric. However, this is not necessary. The rim elements may equally well have a design that does not allow turning them 180° or, if they do allow turning, it is still not necessary that they be point symmetric.

In case of the sprocket wheel being a conveyor chain sprocket, the slot may be slightly enlarged to allow receipt of particles that may be trapped during use.

The disclosed embodiments have been exemplified as sprocket wheels to be used as conveyor or roller chain sprockets. The same principle may also be equally applicable for conveyor chain assemblies for tracked vehicles or crawler tracks.

Although all embodiments are disclosed with a projection-and-recess arrangement it is to be understood that it could be omitted.

## Claims

1. A sprocket wheel for rotation about a central axis (A) to drive a mating transmission mechanism such as a conveyor, chain or a crawler track, the sprocket wheel (10) comprising a plurality of teeth (12) distributed tangentially about the sprocket wheel (10) and projecting radially from the central axis (A), the plurality of teeth (12) defining a corresponding plurality of slots (14) between them and being configured to mesh with a mating transmission mechanism, the sprocket wheel (10) comprising a sprocket wheel body (18) and a plurality of separate sprocket rim elements (20), wherein each of said sprocket rim elements (20) is detachably attached to the sprocket wheel body (18) by means of a respective attachment screw (26) penetrating into the sprocket wheel body (18) in a substantially radial direction, wherein a radially inner surface portion (34) of each of said sprocket rim elements (20), together with a respective radially outer surface portion (36) of said sprocket wheel body (18), defines a projection-and-recess arrangement providing tangential support to the engagement between the sprocket wheel body (18) and the respective sprocket rim element (20), and further allowing an individual sprocket rim element (20) to be displaced by a linear radial movement away from the sprocket wheel body (18), and wherein said sprocket rim elements (20) are shaped to allow, after removal, re-attachment in a reverse direction with respect to a radial plane, whereby the sprocket wheel is **characterized in that** each of said sprocket rim elements comprises at least one respective slot (14) of said plurality of slots, that each of said attachment screws (26) holds its respective sprocket rim element (20) to the sprocket wheel body (18) at said respective slot (14), and **in that** each of said sprocket rim elements (20) is delimited by a tangentially leading edge (25a) and a tangentially trailing edge (25b), wherein each of said edges (25a-b) is located at the top of a respective tooth (12).

2. The sprocket wheel according to claim 1, wherein the tangentially leading edge (25a) of each sprocket rim element (20) abuts the tangentially trailing edge (25b) of an adjacent sprocket rim element (20).

3. The sprocket wheel according to any of the previous claims, wherein each of said attachment screws (26) is completely countersunk into the bottom of the respective slot.

4. The sprocket wheel according to any of the previous claims, wherein said at least one slot is exactly one slot (14), and each sprocket rim element (20) comprises one leading edge tooth portion (22a) and one trailing edge tooth portion (22b), said tooth portions defining said slot (14) between them.

5. The sprocket wheel according to claim 1, wherein said sprocket rim elements (20) are point symmetric about a plane defined by said central axis (A) and an axis radial to said central axis.

6. The sprocket wheel according to any of the previous claims wherein, at engagement interfaces between said sprocket rim elements (20) and the sprocket wheel body (18), an axial width (Wᵣ) of the sprocket rim elements (20) exceeds an axial width (W_{b}) of the sprocket wheel body (18).

7. A sprocket wheel kit comprising a sprocket wheel body (18) and a plurality of sprocket rim elements (20), the sprocket wheel body (18) and sprocket rim elements (20) being shaped to form, together with a plurality of attachment screws (26), a sprocket wheel (10) according to any of previous claims.

8. A replacement sprocket rim element (20) for a sprocket wheel (10) or a sprocket wheel kit according to any of the previous claims.

## Patentansprüche

1. Kettenrad zur Drehung um eine Mittelachse (A), um einen passenden Übersetzungsmechanismus, wie zum Beispiel eine Förderbahn, eine Kettenschiene oder eine Raupenkette, anzutreiben, das Kettenrad (10) aufweisend eine Mehrzahl von Zähnen (12), die tangential rund um das Kettenrad (10) verteilt sind und radial von der Mittelachse (A) abstehen, die Mehrzahl von Zähnen (12) definierend eine entsprechende Mehrzahl von Schlitzen (14) zwischen ihnen und derart gestaltet, dass sie in einen passenden Übersetzungsmechanismus eingreifen, das Kettenrad (10) aufweisend einen Kettenradkörper (18) und eine Mehrzahl von getrennten Kettenradkranzelementen (20), wobei jedes der Kettenradkrankelemente (20) abnehmbar jeweils mittels einer entsprechenden Befestigungsschraube (26), die in einer im Wesentlichen radialen Richtung in den Kettenradkörper (18) eindringt, am Kettenradkörper (18) angebracht ist, wobei ein radial innenliegender Flächenabschnitt (34) jedes der Kettenradkranzelemente (20) zusammen mit einem entsprechenden radial außenliegenden Flächenabschnitt (36) des Kettenradkörpers (18) eine Vorsprung-und-Ausnehmungs-Anordnung definiert, welche eine tangentiale Unterstützung für den Eingriff zwischen dem Kettenradkörper (18) und dem entsprechenden Kettenradkrankelement (20) schafft, und ferner ermöglicht, dass ein einzelnes Kettenradkranzelement (20) durch eine geradlinige Radialbewegung vom Kettenradkörper (18) weggeschoben wird, und wobei die Kettenradkranzelemente (20) derart geformt sind, dass nach ihrer Abnahme eine Wiederbefestigung in einer umgekehrten Richtung in Bezug auf eine Radialebene möglich ist, wobei das Kettenrad **dadurch gekennzeichnet ist, dass** jedes der Kettenradkranzelemente mindestens einen entsprechenden Schlitz (14) der Mehrzahl von Schlitzen aufweist, dass jede der Befestigungsschrauben (26) ihr entsprechendes Kettenradkranzelement (20) beim entsprechenden Schlitz (14) am Kettenradkörper (18) hält, und dass jedes der Kettenradkranzelemente (20) durch eine tangentiale Vorderkante (25a) und eine tangentiale Hinterkante (25b) begrenzt ist, wobei jede der Kanten (25a-b) an der Oberseite eines entsprechenden Zahns (12) angeordnet ist.

2. Kettenrad nach Anspruch 1, wobei die tangentiale Vorderkante (25a) jedes Kettenradkranzelements (20) an die tangentiale Hinterkante (25b) eines benachbarten Kettenradkranzelements (20) angrenzt.

3. Kettenrad nach einem der vorstehenden Ansprüche, wobei jede der Befestigungsschrauben (26) vollständig im Boden des jeweiligen Schlitzes versenkt ist.

4. Kettenrad nach einem der vorstehenden Ansprüche, wobei der mindestens eine Schlitz exakt ein Schlitz (14) ist, und jedes Kettenradkranzelement (20) einen Vorderkantenzahnabschnitt (22a) und einen Hinterkantenzahnabschnitt (22b) aufweist, wobei die Zahnabschnitte den Schlitz (14) zwischen den Elementen definieren.

5. Kettenrad nach Anspruch 1, wobei die Kettenradkranzelemente (20) punktsymmetrisch um eine durch die Mittelachse (A) und eine radial zu der Mittelachse (A) angeordnete Achse definierte Ebene angeordnet sind.

6. Kettenrad nach einem der vorstehenden Ansprüche, wobei an Eingriffsflächen zwischen den Kettenradkranzelementen (20) und dem Kettenradkörper (18) eine axiale Breite (Wᵣ) der Kettenradkranzelemente (20) eine axiale Breite (W_{b}) des Kettenradkörpers (18) überschreitet.

7. Kettenradbausatz umfassend einen Kettenradkörper (18) und eine Mehrzahl von Kettenradkranzelementen (20), wobei der Kettenradkörper (18) und die Kettenradkranzelemente (20) derart geformt sind, dass sie zusammen mit einer Mehrzahl von Befestigungsschrauben (26) ein Kettenrad (10) nach einem der vorstehenden Ansprüche bilden.

8. Ersatzkettenradkranzelement (20) für ein Kettenrad (10) oder einen Kettenradbausatz nach einem der vorstehenden Ansprüche.

## Revendications

1. Roue dentée destinée à tourner autour d'un axe central (A) pour entraîner un mécanisme de transmission à accouplement tel qu'un convoyeur, une chaîne ou une chenille, la roue dentée (10) comprenant une pluralité de dents (12) réparties tangentiellement autour de la roue dentée (10) et faisant saillie radialement à partir de l'axe central (A), la pluralité de dents (12) définissant une pluralité correspondante de fentes (14) entre elles, tout en étant configurée pour engrener avec un mécanisme de transmission à accouplement, la roue dentée (10) comprenant un corps de roue dentée (18) et une pluralité d'éléments de bord de roue dentée (20) séparés, chacun desdits éléments de bord de roue dentée (20) étant fixé de façon détachable au corps de roue dentée (18) à l'aide d'une vis de fixation (26) respective pénétrant dans le corps de roue dentée (18) dans une direction substantiellement radiale, dans laquelle une partie de surface radialement intérieure (34) de chacun desdits éléments de bord de roue dentée (20), ensemble avec une partie de surface radialement extérieure (36) respective dudit corps de roue dentée (18), définit un arrangement de saillies et de cavités fournissant un support tangentiel à l'engagement entre le corps de roue dentée (18) et l'éléments de bord de roue dentée (20) respectif, et permettant en outre le déplacement d'un élément de bord de roue dentée (20) individuel selon un mouvement radial linéaire à distance du corps de roue dentée (18), et dans laquelle lesdits éléments de bord de roue dentée (20) sont formés de manière à permettre, après le retrait, une nouvelle fixation dans une direction inverse par rapport à un plan radial, la roue dentée étant **caractérisée en ce que** chacun desdits éléments de bord de roue dentée comprend au moins une fente respective (14) parmi la pluralité de fentes, **en ce que** chacune desdites vis de fixation (26) maintient sont élément de bord de roue dentée (20) respectif sur le corps de roue dentée (18) au niveau de ladite fente respective (14), et **en ce que** chacun desdits éléments de bord de roue dentée (20) est délimité par un bord tangentiellement avant (25a) et un bord tangentiellement arrière (25b), chacun desdits bords (25a-b) étant situé en haut d'une dent respective (12).

2. Roue dentée selon la revendication 1, dans laquelle le bord tangentiellement avant (25a) de chaque élément de bord de roue dentée (20) bute contre le bord tangentiellement arrière (25b) d'un élément de bord de roue dentée (20) adjacent.

3. Roue dentée selon l'une quelconque des revendications précédentes, dans laquelle chacune desdites vis de fixation (26) est entièrement enfoncée dans le fond de la fente respective.

4. Roue dentée selon l'une quelconque des revendications précédentes, dans laquelle ladite au moins une fente est exactement une fente (14), et chaque élément de bord de roue dentée (20) comprend une partie de dent de bord avant (22a) et une partie de dent de bord arrière (22b), lesdites parties de dent définissant ladite fente (14) entre elles.

5. Roue dentée selon la revendication 1, dans laquelle lesdits éléments de bord de roue dentée (20) sont symétriques autour d'un plan défini par ledit axe central (A) et un axe radial audit axe central.

6. Roue dentée selon l'une quelconque des revendications précédentes, dans laquelle, au niveau d'interfaces d'engagement entre lesdits éléments de bord de roue dentée (20) et le corps de roue dentée (18), une largeur axiale (Wᵣ) des éléments de bord de roue dentée (20) dépasse une largeur axiale (W_{b}) du corps de roue dentée (18).

7. Kit de Roue dentée comprenant un corps de roue dentée (18) et une pluralité d'éléments de bord de roue dentée (20), le corps de roue dentée (18) et les éléments de bord de roue dentée (20) étant conçus de manière à former, ensemble avec une pluralité de vis de fixation (26), une roue dentée (10) selon l'une quelconque des revendications précédentes.

8. Élément de bord de roue dentée (20) de remplacement pour une roue dentée (10) ou un kit de roue dentée selon l'une quelconque des revendications précédentes.
